# EUROPEAN PATENT APPLICATION

(11) **EP 1 498 341 A1**
(43) Date of publication of application: **19.01.2005**
(21) Application number: 03745981.5
(22) Date of filing: 09.04.2003
(51) Int. Cl.: B62D 6/00, F02D 29/02, F02D 45/00, B60G 17/015, B60R 16/02

(54) **VEHICLE CAPABLE OF CHANGING VEHICLE CHARACTERISTICS**

(30) Priority: 11.04.2002 JP 2002109391; 03.06.2002 JP 2002161332
(71) Applicant: NSK Ltd.,, Shinagawa-ku, Tokyo 141-8560 (JP)
(72) Inventor: ITAKURA, Yusuke, c/o NSK LTD., Maebashi-Shi, Gunma 371-8527 (JP)
(74) Representative: Klunker . Schmitt-Nilson . Hirsch
(86) International application number: PCT/JP2003/004488
(87) International publication number: WO 2003/084799

(57) **Abstract**

Capable of setting a vehicle characteristic effectively depending on a taste of a vehicle driver, expanding a pleasure of driving with that characteristic setting, including a vehicle characteristic selecting/setting portion for setting the vehicle characteristic to a free arbitrary characteristic in order to intensify the positioning of a vehicle as a tasteful product, so that a vehicle is enabled to travel under a characteristic set up by the vehicle characteristic selecting/setting portion.

## Description

### TECHNICAL FIELD

The present invention relates to a vehicle in which vehicle characteristic such as engine characteristic and steering characteristic is changed arbitrarily and set up by a vehicle driver, the vehicle being capable of changing a vehicle characteristic which can determine whether the setting is valid or invalid, and a control apparatus of electric power steering unit loaded on that vehicle and having a function for setting the steering characteristic freely depending on a desire of the vehicle driver.

### BACKGROUND ART

Conventionally, vehicles whose characteristic can be changed depending on a desire of a vehicle driver or operating condition have been marketed. For example, change-over of AT/ shift (automatic transmission) pattern, suspension normal mode/sporty mode and the like is generally carried out and conventional vehicles have a narrow range which a vehicle driver can select, providing only a low freedom.

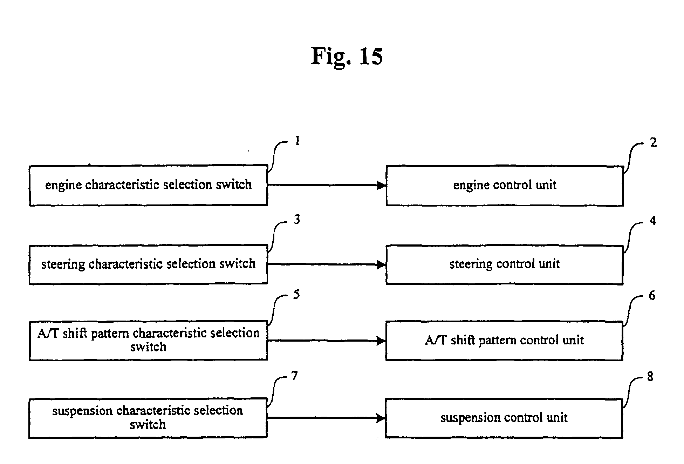

FIG. 15 shows an example of its configuration. An engine control unit 2 is driven by an engine characteristic selected by an engine characteristic selection switch 1, a steering control unit 4 is driven by a steering characteristic selected by a steering characteristic selection switch 3, an A/T shift pattern control unit 6 is drive by A/T shift pattern characteristic selected by an A/T shift pattern characteristic selection switch 5 and a suspension control unit 8 is driven by a suspension characteristic selected by a suspension characteristic selection switch 7.

A conventional vehicle is individually provided with a combination of the engine characteristic selection switch 1 and the engine control unit 2, a combination of the steering characteristic selection switch 3 and the steering control unit 4, a combination of the A/T shift pattern characteristic selection switch 5 and the A/T shift pattern control unit 6 and a combination of the suspension selection switch 7 and the suspension control unit 8, providing a system for a vehicle driver to be capable of selecting one of the plural vehicle characteristics prepared preliminarily by a vehicle manufacturer by means of a key or the like.

As the conventional steering control unit 4, an electric power steering unit has been well known and a conventional electric power steering unit will be described.

In the electric power steering unit, a driving force of a motor is applied to a steering shaft or a rack shaft as an auxiliary load by a transmission mechanism such a gear and a belt through a reducing gear.

Such a conventional electric power steering unit executes feedback control on a motor current to generate an assist torque (steering auxiliary torque) accurately.

The feedback control adjusts a motor applied voltage to reduce a difference between a current instruction value and a motor current detection value and generally, the adjustment of the motor applied voltage is carried out by adjusting duty ratio of PWM (pulse width modulation).

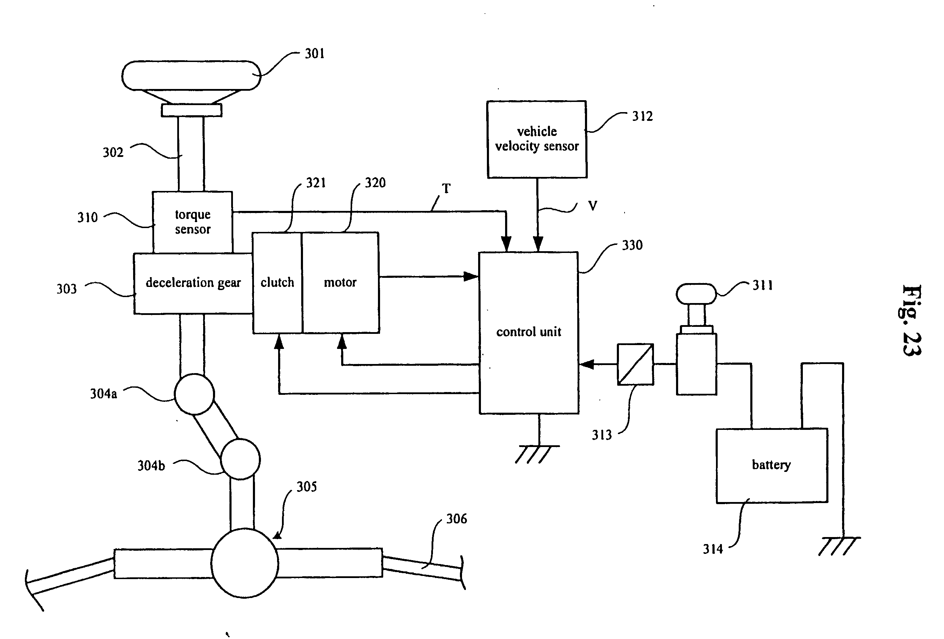

Here, a general structure of the electric power steering unit will be described with reference to FIG. 23 and a shaft 302 of a steering wheel 301 is coupled with a tie-rod 306 of steered wheels through a deceleration gear 303, universal joints 304a, 304b and a pinion rack mechanism 305. The shaft 302 is provided with a torque sensor 310 for detecting a steering torque of the steering wheel 301 and a motor 320 for assisting the steering force of the steering wheel 301 is coupled to the shaft 302 through a clutch 321 and a deceleration gear 303.

Electricity is supplied to a control unit 330 for controlling the power steering unit from a battery 314 through an ignition key 311 and a relay 313 and the control unit 330 computes a steering assist instruction value I of an assist instruction based on a steering torque T detected by the torque sensor 310 and a vehicle velocity V detected by a vehicle velocity sensor 312 so as to control a current supplied to the motor 320 based on the computed steering assist instruction value I. The clutch 321 is controlled to be ON/OFF by the control unit 330 and in normal operating condition, it is kept ON (coupled). When it is determined that the power steering unit is in a trouble by the control unit 330, if the power source (voltage Vb) of the battery 314 is turned OFF by the ignition key 311 and the relay 313, the clutch 321 is turned OFF (released).

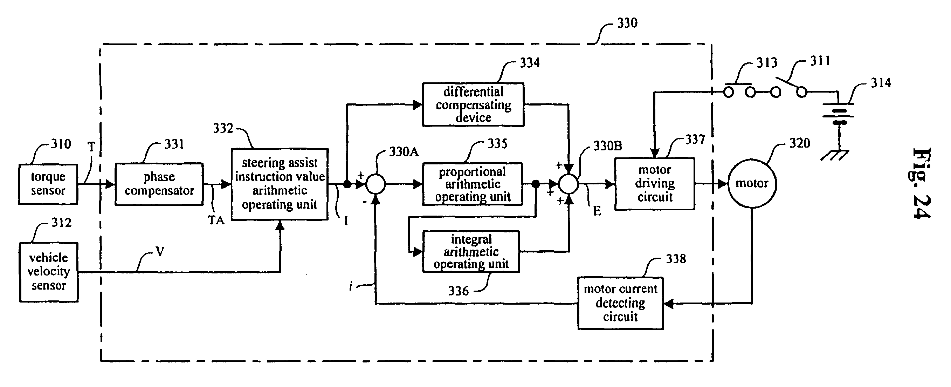

The control unit 330 is constituted of mainly CPU and a general function executed by a program within the CPU is shown in FIG. 24. For example, a phase compensation device 331 indicates not a phase compensating device as an independent hardware, but phase compensating function to be executed by the CPU. The function and operation of the control unit 330 will be described. A steering torque T, which is to be detected by a torque sensor 310 and inputted, is compensated in terms of phase by the phase compensating device 331 in order to improve the stability of steering system and a steering torque TA compensated in terms of phase is inputted to a steering assist instruction value arithmetic operating unit 332. A vehicle velocity V detected by the vehicle velocity sensor 312 is inputted to the steering assist instruction value arithmetic operating unit 332. The steering assist instruction value arithmetic operating unit 332 determines a steering assist instruction value I as a control objective value of current to be supplied to the motor 320 based on the inputted steering torque TA and the vehicle velocity V. The steering assist instruction value I is inputted not only to a subtractor 330A but also to a differential compensating device 334 of feed-forward system to intensify a response speed. A differential (I-i) of the subtractor 330A is inputted to a proportional arithmetic operating device 335 and its proportional output is inputted to an adder 330B and further an integral arithmetic operating device 336 to improve the characteristic of the feed-back system. Outputs of the differential compensating device 334 and the integral arithmetic operating unit 336 are inputted to the adder 330B and a current instruction value E, which is a result of addition in the adder 330B, is inputted to a motor driving circuit 337 as a motor drive signal. A motor current value i of the motor 320 is detected by a motor current detecting circuit 338 and a motor current detection value i is inputted to the subtractor 330A for feed-back.

However, recently, the vehicle has tended to be positioned as not a mere means for moving but as a tasteful product for a vehicle driver (owner) increasingly. Accompanied by this, it has been demanded to expand the freedom on selection by the vehicle driver and customize a vehicle corresponding to the taste of the vehicle driver.

As regards the above-described electric power steering unit, because its motor is controlled according to a specified steering characteristic, a produced steering feeling is constant so that it is impossible to obtain a steering feeling corresponding to the taste of a vehicle driver.

Contrary to this, Japanese Patent No.2949293 has proposed an idea which enables the steering characteristic to be selected corresponding to the taste of a vehicle driver. This idea proposes a system which enables the vehicle driver to select one of plural steering characteristics prepared by a vehicle manufacturer (characteristics estimated and prepared by a vehicle manufacturer such as, standard, heavier, lighter).

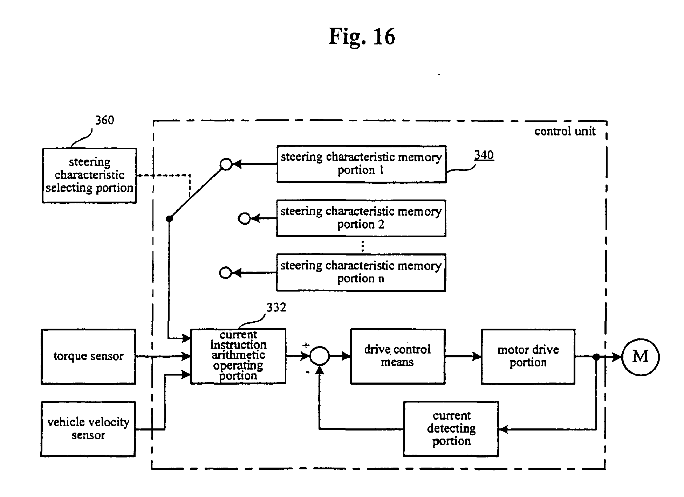

FIG. 16 is a block diagram outlining it and there are provided plural steering characteristic memory portions 340 each containing a different steering (steering) characteristic. If the vehicle driver selects a desired steering characteristic by means of a steering characteristic selecting portion 360, the information is inputted to a current instruction arithmetic operating portion 332 and the motor is controlled based on a current instruction value computed there.

However, those steering characteristics are produced preliminarily and do not always match every user. Further the positioning of the vehicle has been changing from a mere tool for moving to a tool for taking pleasure in driving and accompanied by this, it has been demanded to customize the steering characteristic corresponding to the taste of each vehicle driver.

The invention has been accomplished in views of the above-described circumstances and an object of the present invention is to provide a vehicle capable of changing the vehicle characteristic arbitrarily, in which the steering characteristic and other vehicle characteristic can be set up freely corresponding to the taste of a vehicle driver so as to expand a pleasure of driving a vehicle by that characteristic setting, so that the positioning of the vehicle as a tasteful product is intensified while whether the characteristic setting is valid or invalid can be determined.

### DISCLOSURE OF THE INVENTION

The present invention concerns a vehicle capable of changing vehicle characteristic and the above-described object of the invention is achieved by providing a vehicle characteristic selecting/setting portion which sets at least one of engine characteristic, steering characteristic, A/T shift pattern, suspension characteristic, steering wheel shaft angle, steering wheel longitudinal position, sheet position and side mirror position to a free arbitrary characteristic.

The invention concerns a vehicle capable of changing vehicle characteristic and the above-described object of the invention is achieved by providing plural vehicle characteristic setting portions for setting the vehicle characteristic to a free arbitrary characteristic; a vehicle characteristic memory portion for memorizing the set vehicle characteristic; and a vehicle characteristic setting selection portion for selecting an arbitrary vehicle characteristic from the vehicle characteristic memory portion.

The above-described object of the invention is achieved effectively by constructing the vehicle characteristic setting selection portion to be capable of changing over a vehicle adjustment mechanism adjustable depending on the taste or body size of a vehicle driver as personal data of every vehicle driver or constructing the vehicle characteristic setting selection portion as an independent unit, which transmits memory data from the vehicle characteristic memory portion based on a setting of the vehicle characteristic setting selection portion to each control unit for controlling the vehicle characteristic or constructing each control unit for controlling the vehicle characteristic with a default characteristic memory portion for memorizing a default characteristic set up upon production, a setting characteristic determining portion for determining whether the setting of the vehicle characteristic setting portion is valid or invalid, and a selection switch which is changed over by the setting characteristic determining portion or constructing so that, when the setting characteristic determining portion determines that it is valid, the selection switch is changed over to transmit the setting data of the vehicle characteristic setting portion to each of the control units, and that when the setting characteristic determining portion determines that it is invalid, the selection switch is changed over to transmit memory data of the default characteristic memory portion to each of the control units.

The invention concerns a vehicle capable of changing vehicle characteristic and a control apparatus of an electric power steering unit which can be loaded on that vehicle and is capable of setting the steering characteristic freely corresponding to a desire of a vehicle driver. The above object of the invention is achieved by a control apparatus of electric power steering unit for controlling a motor so as to provide a steering mechanism with a steering assist force based on a steering assist instruction value computed based on a steering torque generated in a steering shaft and a current instruction value computed from a motor current detection value, the control apparatus further comprising a steering characteristic setting means which enables avehicle driver to set up a steering characteristic arbitrarily and controlling the motor based on a steering characteristic set up by the steering characteristic setting means.

Further, the above-described object of the invention is achieved effectively by the control apparatus of electric power steering unit further comprising: plural steering characteristic memory means for memorizing each steering characteristic set up by the steering characteristic setting means; and a steering characteristic selecting means for selecting a desired steering characteristic from the memorized plural kinds of the steering characteristics.

Further, the above-described object of the invention is achieved effectively by the control apparatus of electric power steering unit further comprising: a default characteristic memory means for memorizing a default steering characteristic set up upon production; and a setting characteristic determining means for determining whether the steering characteristic is valid or invalid with reference to a preliminarily specified safety standard, wherein when the setting characteristic determining means determines that it is invalid, the motor is controlled based on the default steering characteristic.

Further, the above-described object of the invention is achieved effectively by the control apparatus of electric power steering unit wherein a steering characteristic setting/selecting unit containing at least the steering characteristic setting means and the steering characteristic selecting means is connected to a current instruction arithmetic operating portion for computing the current instruction value through serial communication.

### BRIEF DESCRIPTION OF THE DRAWINGS

FIG. 1 is a diagram showing an example of the characteristic of an output torque to an input torque of an electric power steering unit;
FIG. 2 is a diagram showing an example of the characteristic of assist ratio to a vehicle velocity;
FIG. 3 is a block configuration diagram showing an embodiment of the present invention;
FIG. 4 is a diagram showing an example of a setting objective selection screen;
FIG. 5 is a diagram showing an example of steering setting selection screen;
FIG. 6 is a diagram showing an example of steering I/O torque characteristic setting screen;
FIG. 7 is a block configuration diagram showing other embodiment of the invention;
FIG. 8 is a diagram for explaining a change of characteristic;
FIG. 9 is a diagram for explaining a change of characteristic;
FIG. 10 is a diagram for explaining a change of characteristic;
FIG. 11 is a block configuration diagram showing an example of application of the invention;
FIG. 12 is a flow chart showing an example of the operation for invalidity determination;
FIG. 13 is a diagram for explaining the invalidity determination;
FIG. 14 is a block configuration diagram showing still other embodiment of the invention;
FIG. 15 is a block diagram for explaining selection of conventional vehicle characteristic;
FIG. 16 is a diagram showing an example of conventional art of the electric power steering unit control apparatus relating to the invention;
FIG. 17 is a diagram showing the basic structure of the electric power steering unit control apparatus of the invention;
FIG. 18 is a diagram showing a first embodiment of the electric power steering unit control apparatus of the invention;
FIG. 19 is a diagram showing a second embodiment of the electric power steering unit control apparatus of the invention;
FIG. 20 is a diagram showing a third embodiment of the electric power steering unit control apparatus of the invention;
FIG. 21 is a diagram showing the torque I/O characteristic;
FIG. 22 is a diagram showing vehicle velocity response characteristic;
FIG. 23 is a diagram showing a general structure of the electric power steering unit; and
FIG. 24 is a block diagram showing general functions to be executed by the control unit of the electric power steering unit.

### BEST MODE FOR CARRYING OUT THE INVENTION

The present invention develops a selecting means for the characteristic (for example, standard, heavier, lighter) used in the conventional vehicle and expands the degree of freedom on vehicle driver's selection by memorizing data set freely by a vehicle driver for selection and setting.

For setting of a high freedom, input under GUI (Graphic User Interface) environment is desirable and to achieve this, it is considered to (1) load a vehicle characteristic setting computer and (2) install a vehicle characteristic setting software on a built-in type navigation unit. For the invention, the degree of freedom of the setting will be described about an electric power steering unit. The degree of freedom of the setting which a vehicle driver demands to the electric power steering is often a requirement for feeling on steering, for example, heavy steering feeling, and light steering feeling.

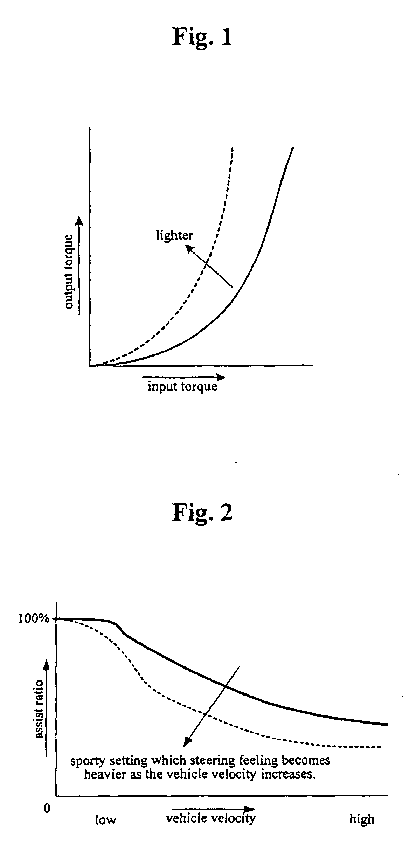

According to the I/O torque characteristic of the electric power steering unit, first, it is considered to determine its basic weight and change the I/O torque characteristic indicating a static steering characteristic as shown in FIG. 1. FIG. 1 shows a force (output torque) generated by an electric power steering to a steering wheel input (input torque). A transition of the characteristic from a solid line to a dotted line indicates that the steering wheel becomes light. Thus, according to the present invention, a graph as shown in FIG. 1 is displayed by means of the GUI, and a vehicle driver can obtain his desired I/O torque characteristic by changing it.

Further, because the vehicle velocity response characteristic allows the steering force itself to change corresponding to the vehicle velocity, both the hydraulic power steering unit and the electric power steering unit are provided with a vehicle velocity response function which corrects the vehicle velocity response characteristic. For example, a characteristic that assist ratio decreases as the vehicle velocity increases based on the characteristic when the vehicle velocity is 0 km/h as shown in FIG. 2 is a general one. Thus, the vehicle velocity response function can be expressed with a graph as shown in FIG. 2 by means of the GUI, so that a sense of value that a vehicle is handled as a taste product can be intensified by vehicle driver's setting it at his disposal.

As regards the suspension characteristic, engine characteristic and A/T pattern as well as the above-described I/O torque characteristic and vehicle velocity response, the same effect can be obtained by setting up corresponding to individual characteristics. In the meantime, the engine characteristic mentioned in the invention means the characteristic of prime mover (for example, fuel injection control characteristic, ignition timing control characteristic, turbocharger pressure control characteristic and the like).

Hereinafter, the embodiment of the invention will be described with reference to the accompanying drawings.

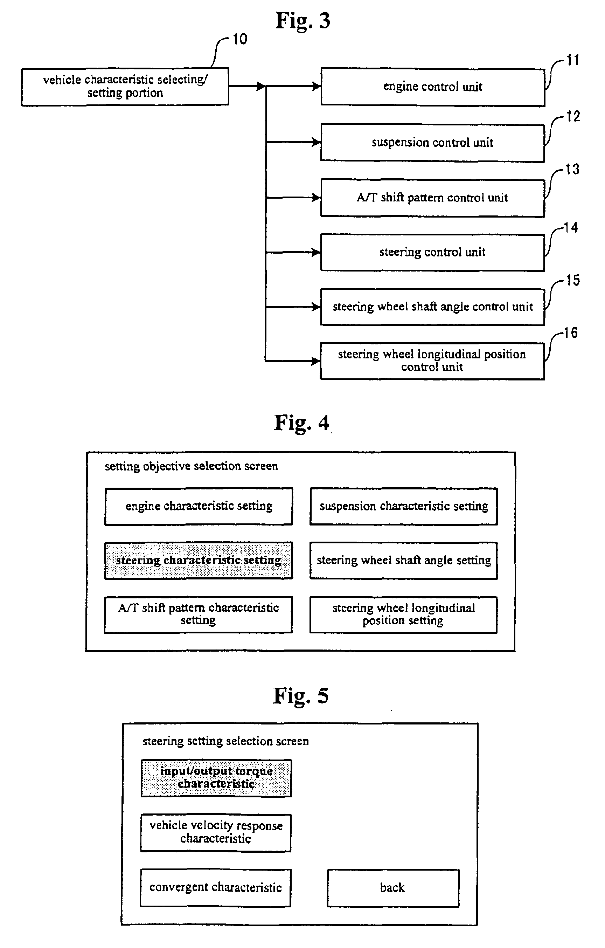

FIG. 3 shows an example of the basic structure of the invention and a vehicle characteristic selecting/setting portion 10 is capable of controlling an engine control unit 11, a suspension control unit 12, an A/T shift pattern control unit 13, a steering control unit 14, a steering wheel shaft angle control unit 15 and a steering wheel longitudinal position control unit 16 by means of an electric motor. A detailed vehicle characteristic can be changed freely through the vehicle characteristic selecting/setting portion 10 by a vehicle driver and the detailed change of the vehicle characteristic integrated by the vehicle characteristic selecting/setting portion 10 and memory (setting) of the changed result can be carried out for the plural control units 11-16.

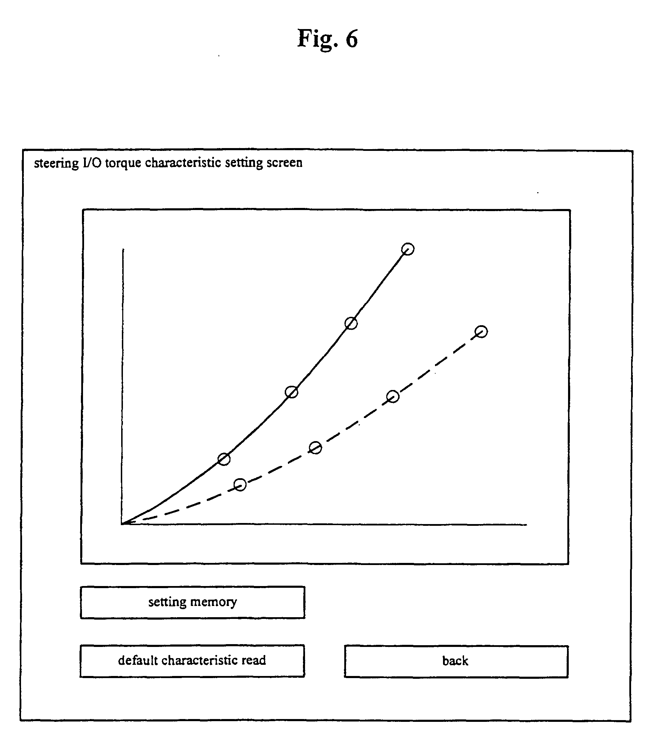

FIG. 4 shows an example of a setting objective selection screen displayed on the vehicle characteristic selecting/setting portion 10. According to this example, "steering wheel shaft angle setting" and "steering wheel longitudinal position setting" are available as well as "engine characteristic setting", "steering characteristic setting", "A/T shift pattern characteristic setting" , and "suspension characteristic setting". When "steering characteristic setting" is selected on the same screen, the steering setting selection screen as shown in FIG. 5 is displayed, so that "I/O torque characteristic" , "vehicle velocity response characteristic" or "convergence characteristic" can be selected on the screen. If "I/O torque characteristic" is selected on the screen of FIG. 5, the steering I/O torque characteristic setting screen shown in FIG. 6 is displayed and on this setting screen, a desired I/O torque characteristic is set up using the GUI method. Because an initial value is difficult to produce when such a free setting is carried out (from a condition in which nothing exists), it is preferable to prepare a default value and use it as a reference. Thus, memory of setting and reading of default characteristic are enabled on the screen.

By executing such a setting about "engine characteristic setting", "steering characteristic setting", "A/T shift pattern characteristic setting", "suspension characteristic setting", "steering wheel shaft angle setting" and "steering wheel longitudinal position setting", the degree of freedom on selection of the vehicle driver is expanded, so that a vehicle can be customized corresponding to a vehicle driver's desire.

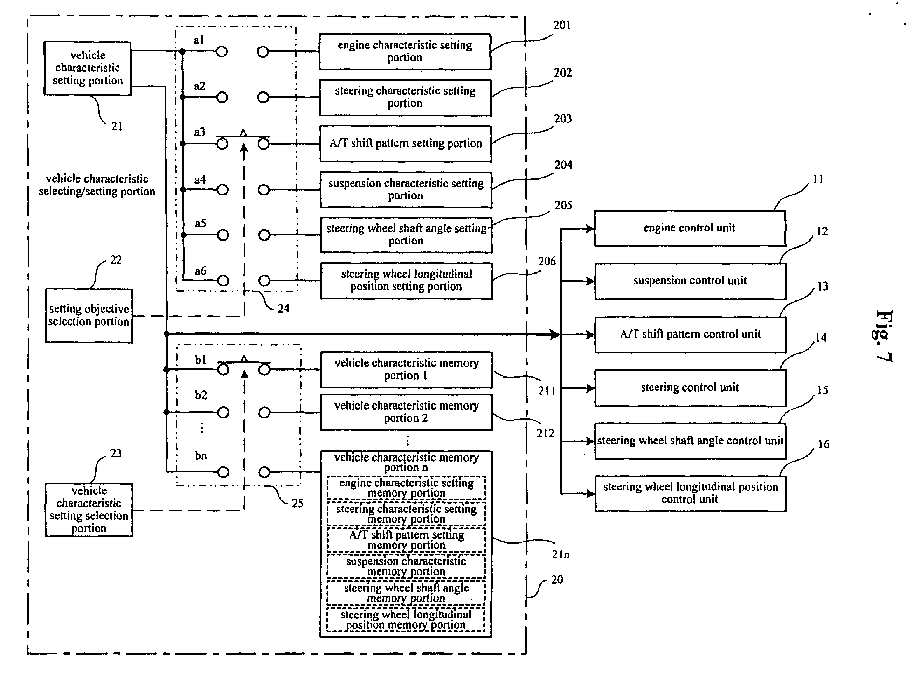

FIG. 7 shows other embodiment of the invention. By connecting different vehicle factor characteristic setting portions (201-206) with a vehicle characteristic setting portion (21) through a setting objective selecting portion (22), different factor vehicle characteristics can be set up in a single vehicle characteristic setting portion. Further by connecting plural vehicle characteristic memory sections (211-21n) (capable of memorizing combinations of vehicle characteristics necessary in batch) through the vehicle characteristic setting selection portion (23) , the vehicle characteristic can be selected freely for every vehicle driver or every operation mode.

That is, a vehicle characteristic selecting/setting portion 20 comprises a vehicle characteristic setting portion 21 for setting up each characteristic, a setting objective selecting portion 22 for changing over a selection switch 24, a vehicle characteristic setting selection portion 23 for changing over a selection switch 25, an engine characteristic setting portion 201 connected to the selection switch 24, a steering characteristic setting portion 202, an A/T shift pattern characteristic setting portion 203, a suspension characteristic setting portion 204, a steering wheel shaft angle setting portion 205,asteering wheellongitudinal positionsetting portion 206 and vehicle characteristic memory portions 211-21n connected to the selection switch 25. Memory values from the vehicle characteristic memory portions 211-21n are transmitted to each control unit (engine control unit 11, suspension control unit 12, A/T shift pattern control unit 13, steering control unit 14, steering wheel shaft angle control unit 15, steering wheel longitudinal position control unit 16) through the selection switch 25 (contact points b1 b2, ... bn) through serial communication. The vehicle characteristic memory portions 211-21n includes a engine characteristic setting memory portion, a steering characteristic set ting memory portion, an A/T shift pattern setting memory portion, a suspension characteristic memory portion, a steering wheel shaft angle memory portion and a steering wheel longitudinal position memory portion.

With such a structure, a vehicle characteristic setting value from each of the characteristic setting portions 201-206 is inputted to the vehicle characteristic setting portion 21 through the contact points (a1-a6) of the selection switch 24 selected by the setting objective selecting portion 22 and a characteristic setting value form the vehicle characteristic setting portion 21 is inputted to the engine control unit 11, the suspension control unit 12, the A/T shift pattern control unit 13, the steering control unit 14, the steering wheel shaft angle control portion 15 and the steering wheel longitudinal position control portion 16 and memorized in the vehicle characteristic memory portions 211-21n through the contact points (bl-bn) of the selection switch 25 selected by the vehicle characteristic setting selection portion 23. For example, the setting objective selecting portion 22 changes over the contact point of the selection switch 24 in order of a1, a2, a3, a4, a5, a6 successively with the selection switch 25 connected to the contact point b1 as shown in the same Figure, so as to memorize an engine characteristic setting value, steering characteristic setting value, A/T shift pattern characteristic setting value, suspension characteristic setting value, steering wheel shaft angle setting value and steering wheel longitudinal position setting value into the vehicle characteristic memory portion 211. The same setting memory is carried out for the contact points b2-bn of the selection switch 25.

By changing over the contact point b1-bn of the selection switch 25 by means of the vehicle characteristic setting selection portion 23 after memorizing the engine characteristic setting value, the steering characteristic setting value, the A/T shift pattern characteristic setting value, the suspension characteristic setting value, the steering wheel shaft angle setting value and the steering wheel longitudinal position setting value into the vehicle characteristic memory portions 211-21n, that is, after a vehicle is purchased, the respective characteristic setting values memorized in the vehicle characteristic memory portions 211-21n can be transmitted to the engine control unit 11, the suspension control unit 12, the A/T shift pattern control unit 13, the steering control unit 14, the steering wheel shaft angle control unit 15 and the steering wheel longitudinal position control unit 16 and controlled.

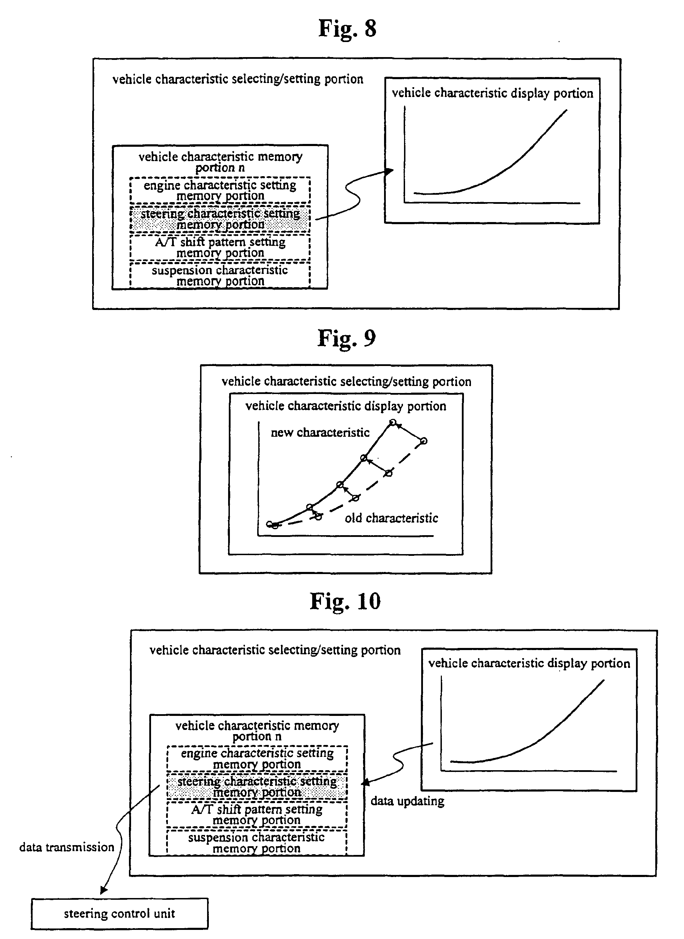

The condition for changing the characteristics will be described with reference to FIGS. 8-10.

As shown in FIG. 8, a vehicle characteristic display portion is displayed on the vehicle characteristic selecting/setting portion 20 by selecting the steering characteristic setting memory portion from the vehicle characteristic memory portions 211-21n. As shown in FIG. 9, characteristic points memorized are indicated and by moving these points for redrawing, a new characteristic is set up and overwritten on the vehicle characteristic memory portions 211-21n read out as shown in FIG. 10 so as to change the characteristic.

According to this embodiment, if a single vehicle is shared by plural persons, their fine tastes of individual persons can be memorized in the vehicle characteristic memory portions 211-21n, so that the taste can be changed over instantaneously. If plural vehicle characteristic memory portions 211-21n and the vehicle characteristic setting selection portion 23 are combined, a single vehicle can be tuned up to a setting suitable for traveling in an urban area for commutation, setting specialized for traveling on a highway for weekend holiday, setting considering a traffic jamming at a sightseeing place, setting for sporty fashion which allows it to attend to an armature automobile race and the like. The human being does not adjust himself to diversified purposes but the character of a vehicle can be changed for correspondence. Upon changing the character of the vehicle corresponding to a usage purpose, it is possible to make a setting taking into account the taste of a vehicle driver and his driving skill instead of a setting prepared by automobile manufacturer. Further, it is permissible to provide the vehicle with a driving mode determining function so that it can be automatically changed to improve a driving pleasure.

Further, it can be considered to combine an immobilizer which is a theft protection device which has increased in the quantity recently. If the invention is composed as part of the theft protection device, the vehicle can be turned inactive by canceling all the vehicle characteristic selections by means of the immobilizer, thereby realizing a high grade theft protection device. Alternatively, if the immobilizer side is provided with a vehicle characteristic setting selection portion and plural keys are prepared while each key is provided with a vehicle characteristic desired by each person, just inserting each key enables to realize the vehicle characteristic desired by each person.

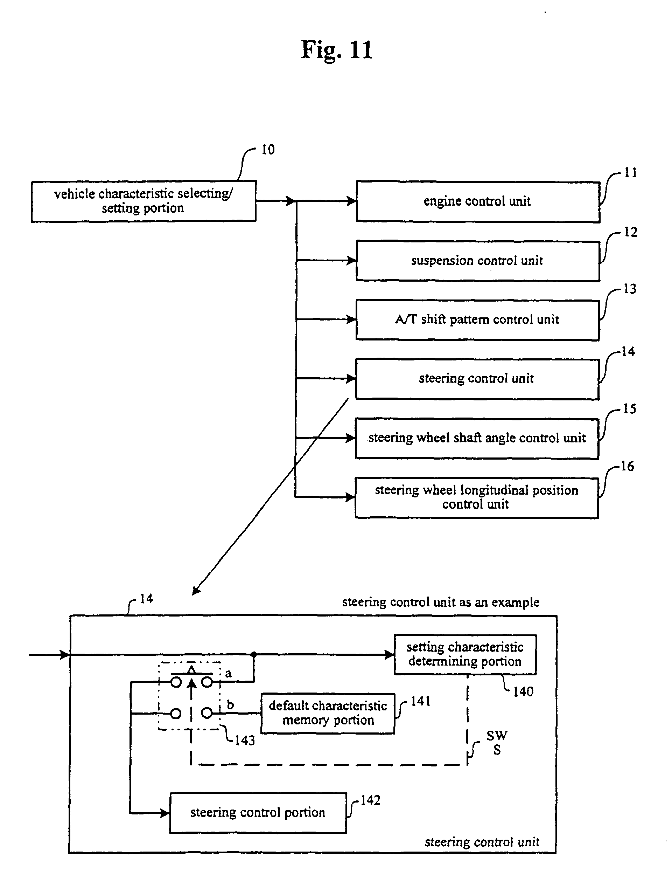

The invention aims at expanding the degree of freedom on selection of a vehicle driver tremendously and as described above, provides a vehicle, which allows a vehicle driver to set up an arbitrary vehicle characteristic freely. However, needless to say, the vehicle driver can set up freely only within a range ensuring the safety as a system or as a vehicle. Further, it is inevitable to refrain the system from being in a dangerous condition by a vehicle driver's setting mistake. Therefore, to achieve the invention, the respective control units 11-16 determine whether the setting in the vehicle characteristic selecting/setting portion 10 as shown in FIG. 11 is within the safety range verified and set preliminarily by means of a setting characteristic determining portion 140. it is necessary to provide such a configuration in which if a setting is out of the safety range of the system, a vehicle driver's setting is excluded and setting data in the safety range prepared in the default characteristic memory portion 141 preliminarily is used.

That is, FIG. 11 shows the structure of a setting characteristic determining means to the steering control unit 14 and setting data from the vehicle characteristic selecting/setting portion 10 is inputted to the setting characteristic determining portion 140 and further inputted to the steering control portion 142 through a change-over switch 143. The default characteristic memory portion 141 memorizes a setting value in the safety range verified and set preliminarily and when the selection switch 143 is changed over to the contact point b, it is inputted to the steering control portion 142. The selection switch 143 is always set to the contact point a and the setting data from the vehicle characteristic selecting/setting portion 10 is inputted to the setting characteristic determining portion 140 through the contact point a of the selection switch 143. At the same time, the setting characteristic determining portion 140 determines whether or not setting data from the vehicle characteristic selecting/setting portion 10 is within the safety range verified and set by the setting data and if it is out of the safety range, outputs a selection signal SWS to change over the selection switch 143 from the contact point a to the contact point b. As a result, a memory value is inputted to the steering control portion 142 from the default characteristic memory portion 141 and the setting data from the vehicle characteristic selecting/setting portion 10 is interrupted.

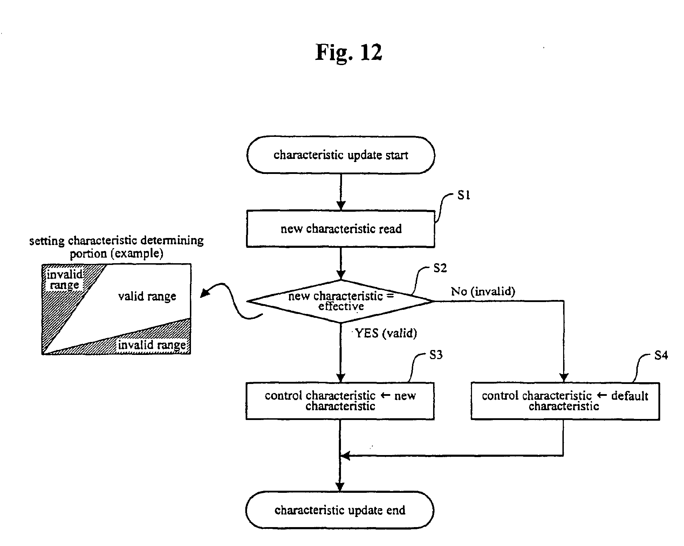

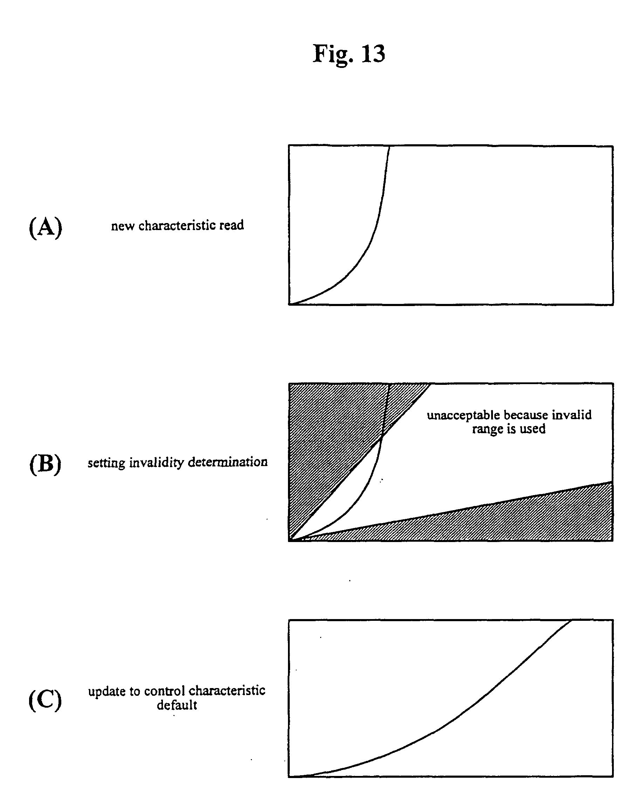

Here, the operation of the setting characteristic determining portion 140 will be described with reference to the flow chart of FIG. 12. First, a newly set new characteristic value is read as shown in FIG. 13(A) (step S1) and whether or not this new characteristic value is valid is determined (step S2). In this case, a shaded portion in FIG. 13(B) is an invalid range and a white portion indicates a valid range. If the new characteristic value uses the invalid range even if slightly, that is, any new characteristic value is within the invalid range, it is determined to be invalid. Then, if the new characteristic value is determined to be valid, the new characteristic value is regarded as a control characteristic value (step S3) and if the new characteristic value is determined to be invalid, the selection switch 143 is changed over from the contact point a to the contact point b and a default characteristic which is memorized in the default characteristic memory portion 141 and as shown in FIG. 13(C) is transmitted to the steering control portion 142 (step S4).

FIG. 11 shows the structure of the setting characteristic determining means for the steering control unit 14 and the same structure can be achieved for the engine control unit 11, the suspension control unit 12, the A/T shift pattern control unit 13, the steering wheel shaft angle control unit 15 and the steering wheel longitudinal position control unit 16. The selection switch 143 may be of an electromagnetic relay, mechanical switch or electronic switch.

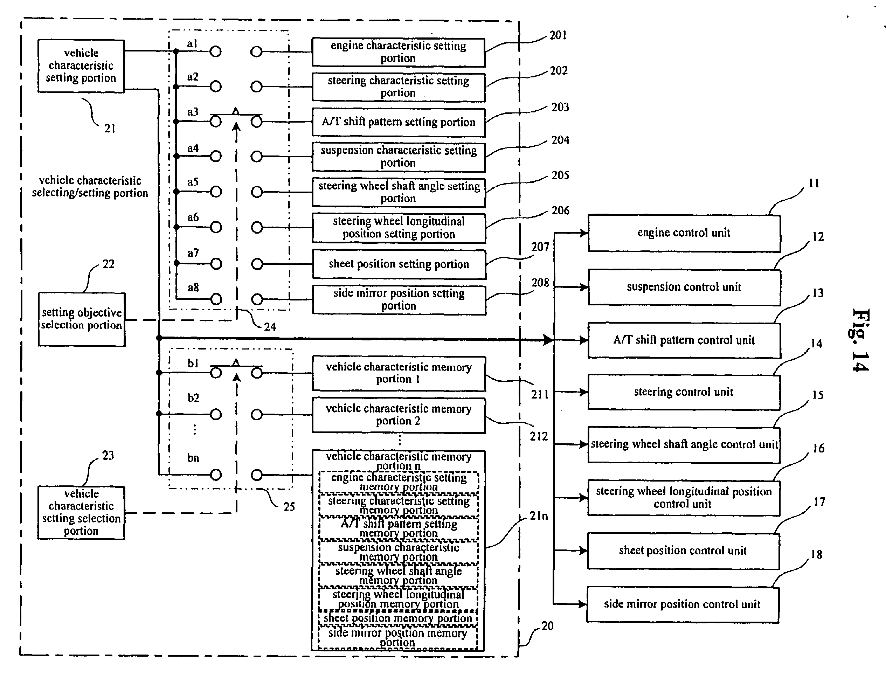

FIG. 14 shows other embodiment of the invention, which includes the vehicle characteristic setting/selecting portion and the setting and selection of a position adjusting mechanism, which is a comfort equipment for a vehicle driver about conventionally existing sheet position and side mirror position (including door mirror and fender mirror) so that vehicle information can be adjusted and selected integrally. That is, FIG. 14 corresponds to FIG. 7, while an (electric) sheet position control unit 17 and (electric) side mirror position control unit 18 are added newly as control objectives. As a result, a sheet position setting portion 207 and a side mirror position setting portion 208 are installed and correspondingly, the contact points a7, a8 of the selection switch 24 are added. The sheet position memory portion and the side mirror position memory portion are added to the vehicle characteristic memory portions 211-21n.

The GUI environment is necessary for achieving a vehicle characteristic setting portion having such a high freedom and a wide application range. In such a case, a device highly dependent of software, for example, using a personal computer is needed. A setting objective desired to change is selected by the setting objective selecting portion 22 and a necessary software is loaded on the vehicle characteristic setting portion 21. A selected setting objective is set up and memorized in the vehicle characteristic memory portions 211-21n. The vehicle characteristic memory portions 211-21n have n memory portions and the setting data of a set vehicle characteristic is memorized in a memory portion selected by the vehicle characteristic setting selection portion 23. The n vehicle characteristic memory portions 211-21n can memorize the setting of the vehicle characteristic which can be changed individually in each memory portion.

The vehicle characteristic setting memorized in the vehicle characteristic selecting/setting portion 20 is transmitted to the respective control units (engine control unit 11, suspension control unit 12, A/T shift pattern control unit 13, steering control unit 14, steering wheel shaft angle control unit 15, steering wheel longitudinal position control unit 16, sheet position control unit 17, side mirror position control unit 18) through such a serial communication as CAN and each control unit executes its own control thereby allowing the vehicle driver to set and select a vehicle characteristic freely.

Hereinafter, the control unit of an electric power steering unit (hereinafter referred to as EPS) optimum for the steering control unit will be described with reference to the accompanying drawings.

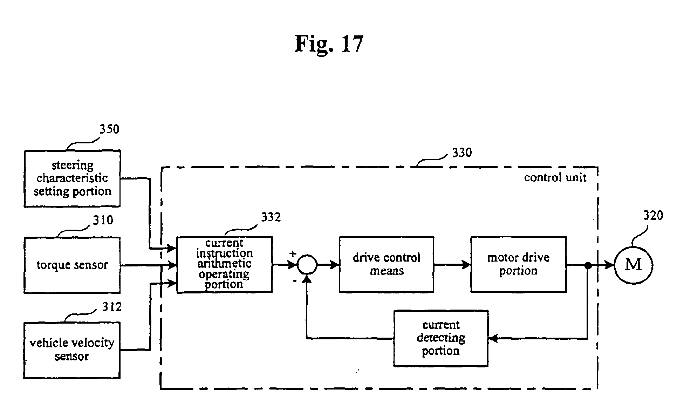

FIG. 17 is a diagram showing the basic structure of the EPS control unit. A steering torque detected by the torque sensor 310, a vehicle velocity detected by the vehicle velocity sensor 312 and a steering characteristic set up by the steering characteristic setting portion 350 are inputted into a current instruction arithmetic operating portion 332 within a control unit 330 and a current to be supplied to a motor 320 is controlled based on a current instruction value computed here.

By providing with a steering characteristic setting portion 350 out of the control unit 330, a parameter fixed within the current instruction arithmetic operating portion 332 for determining the steering characteristic can be changed from out of the control unit 330.

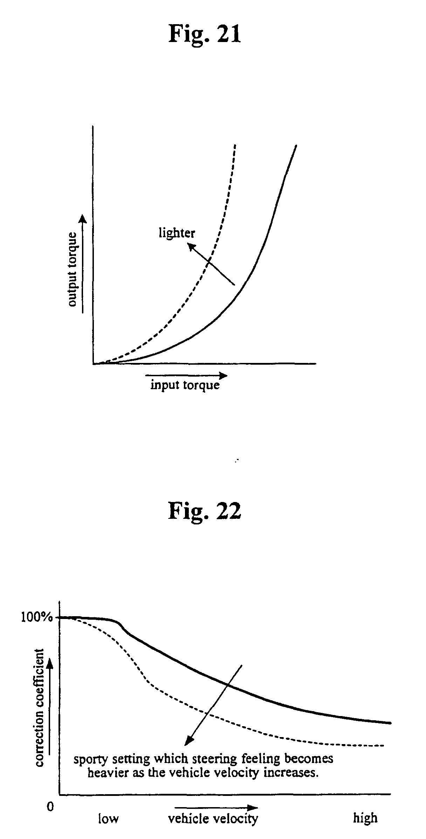

Parameter setting for the steering characteristic in the steering characteristic setting portion 350 will be described with reference to FIGS. 21, 22.

FIG. 21 is a graph showing the I/O characteristic, indicating a force (output torque) generated by the EPS to an input to the steering wheel (input torque).

A graph expressed with a solid line in FIG. 21 indicates a conventional (fixed) I/O characteristic or a default I/O characteristic. That is, if this I/O characteristic is changed as indicated with the dotted line in the same Figure, the output torque is controlled to be increased with respect to the same input torque, so that the operation of the steering wheel becomes light.

Generally, because the steering force changes corresponding to the vehicle velocity, a vehicle velocity response function for correcting it is provided regardless of hydraulic pressure or EPS. The characteristic shown in FIG. 22 which decreases the correction coefficient as the vehicle velocity increases based on the I/O characteristic at the time of a vehicle stop is a general one. The graph expressed with the solid line in FIG. 22 indicates a conventional (fixed) vehicle velocity response characteristic or a default vehicle velocity response characteristic.

That is, if this vehicle velocity response characteristic is changed as indicated with the dotted line, the output torque at a high velocity side is controlled to be decreased with respect to the same input torque, so that the steering wheel becomes heavy or more sporty.

Next, a means which makes a vehicle driver set up the steering characteristic easily as shown in FIGS. 21, 22 will be described.

Upon setting of the steering characteristic, preferably setting having a high freedom is executed under GUI (graphical user interface) environment and the following two methods can be considered to achieve this.

A control micro computer (not shown) within the control unit 330 or a micro computer provided for steering characteristic setting is used and a dedicated software is employed. In this case, a dedicated display is required.

A special software for steering characteristic setting is installed in a built-in type car navigation system. A display of the car navigation system can be used for steering characteristic setting at the same time. If a vehicle driver changes the graph expressed in FIG. 21 or 22 using an input device such as a joystick as indicated with the dotted line while watching the display, the steering characteristic can be set up arbitrarily.

Because the EPS has a high controllability, there are a number of parameters given as the freedom of setting of a user (mainly, highly skilled in driving), such as convergence performance of the steering wheel, steering wheel return characteristic. Thus it is permissible to use these as parameters for setting the steering characteristic.

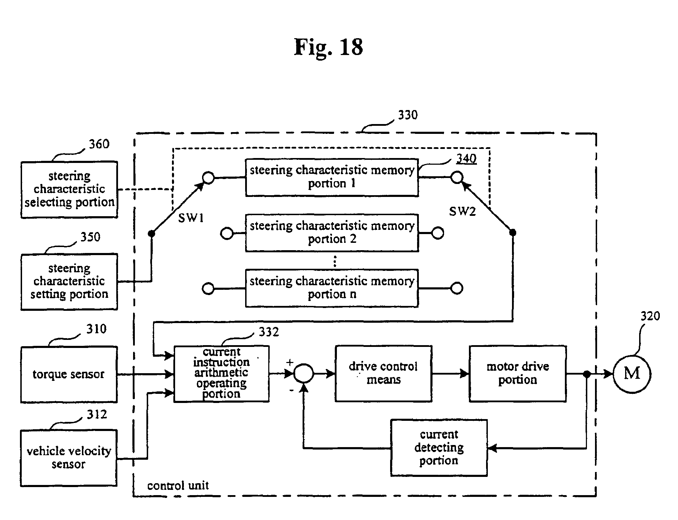

FIG. 18 is a diagram showing the first embodiment of the electric power steering unit which is optimum as the steering control unit. By providing plural steering characteristic memory portions 340 in the control unit 330 and combining the steering characteristic memory portion 340 with the steering characteristic selecting portion 360, plural steering characteristics are memorized by a single steering characteristic setting portion 350, so that one of them can be selected. The plural steering characteristic memory portions 340 enable a free steering characteristic to be created for every vehicle driver or every operation mode.

That is, a steering characteristic memory portion n (n = 1, 2, ... n) for memorizing a steering characteristic set up by the steering characteristic setting portion 350 is selected by changing over the SW1 by means of the steering characteristic selecting portion 360 and after it is memorized, the SW2 is changed over by means of the steering characteristic selecting portion 360 so as to select a steering characteristic to be inputted to the current instruction arithmetic operating portion 332.

For example, when a single vehicle is shared by plural persons, fine tastes of them can be memorized and the taste of the vehicle can be changed over instantaneously. Alternatively, urban traveling mode, which is used in everyday life, highway traveling mode, mountainous road mode and the like can be created for a taste of a vehicle driver and changed over depending on the situation or automatically changed over by an operation mode function mounted on the vehicle for the vehicle driver to take a pleasure in driving.

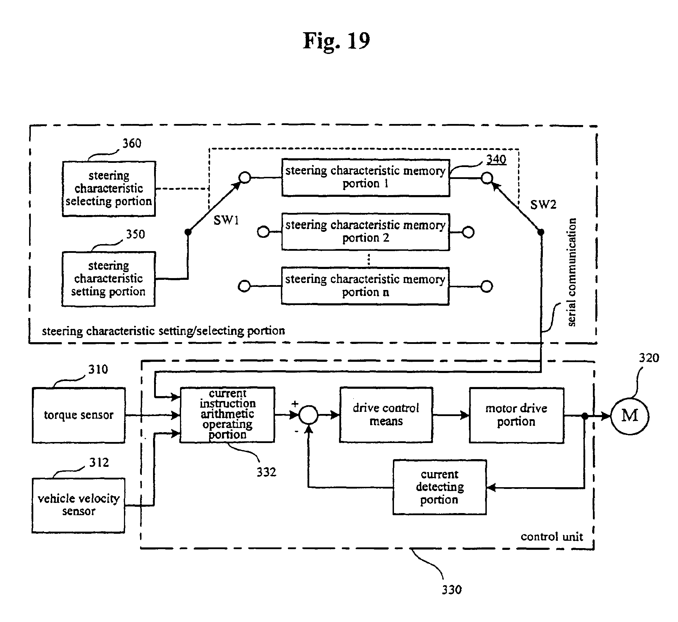

FIG. 19 is a diagram showing a second embodiment of the control unit of the electric power steering unit which is optimum as the steering control unit. Although the basic structure is the same as the first embodiment, it is different in that the steering characteristic setting/selecting portion is separated from the control unit 330. For example, this falls under a case where a special software for steering characteristic setting is installed in a built-in type car navigation unit.

In this case, the steering characteristic setting/selecting portion and the electric power steering unit are connected to each other through a communication means such as serial communication represented by CAN.

The present invention aims at expanding the freedom on selection of a vehicle driver tremendously and provides an electric power steering unit which allows a vehicle driver to set up an arbitrary steering characteristic freely. Needless to say, the free setting by the vehicle driver needs to be realized within a range which ensures the safety as a system (or vehicle).

Further it is inevitable to avoid bringing the system into a dangerous situation by a mistake in vehicle driver's setting.

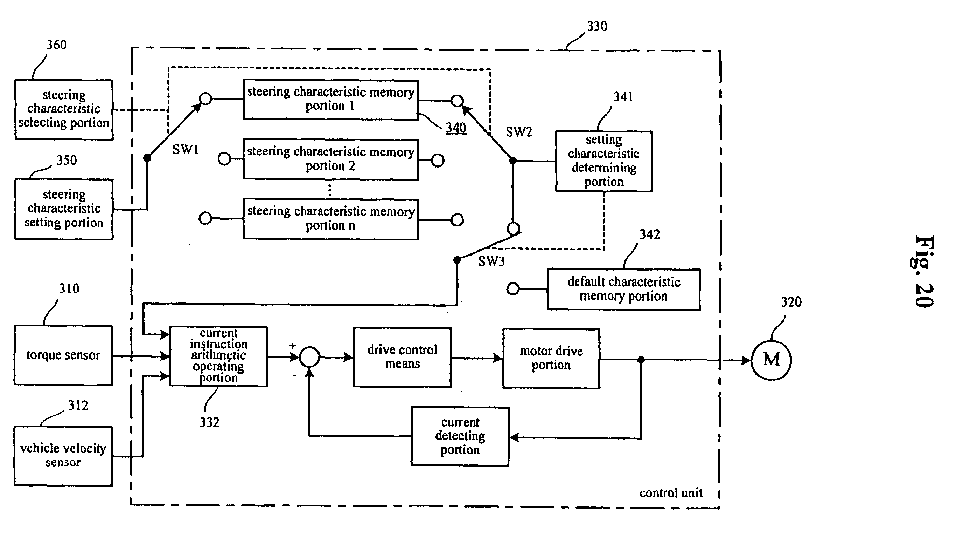

FIG. 20 is a diagram showing a third embodiment of the control unit of an electric power steering unit which is optimum as the steering control unit and has a function to prevent risk.

That is, if a steering characteristic to be inputted to the current instruction arithmetic operating portion is selected by changing over the SW2 after the steering characteristic is set and memorized by changing over the SW1, that steering characteristic is inputted to the setting characteristic determining portion 341 and compared with a safety standard value stored in the setting characteristic determining portion 341. If it is determined that it is within the safety range, that steering characteristic is inputted to the current instruction arithmetic operating portion 332 as it is. Contrary to this, if it is determined that it exceeds the safety range, the SW3 is changed over by the setting characteristic determining portion 341 and a safety default steering characteristic stored in the default characteristic memory portion 342 is inputted to the current instruction arithmetic operating portion 332.

In the meantime, the default steering characteristic may be the one set up by a vehicle manufacturer upon production or a steering characteristic which is set up by the vehicle driver and whose safety is confirmed.

The change-over of the switches SW1-3 may be achieved in terms of hardware or in terms of software.

### INDUSTRIAL APPLICABILITY

As described above, according to the present invention, the vehicle characteristic selecting/setting portion is capable of controlling such a unit as an engine control unit, so that the detailed vehicle characteristic can be changed freely by the vehicle driver by means of the vehicle characteristic selecting /setting portion and further, detailed changes of vehicle characteristics integrated by a single vehicle characteristic selecting/setting portion and storage (setting) of a change result can be realized for plural control units. As a result, the freedom on selection by a vehicle driver is expanded considerably and a highly completed customization fitting to a taste of the vehicle driver can be achieved.

## Claims

1. A vehicle capable of changing vehicle characteristic comprising a vehicle characteristic selecting/setting portion for setting the vehicle characteristic to a free arbitrary characteristic, the vehicle being capable of traveling under a characteristic set by said vehicle characteristic selecting/setting portion.

2. The vehicle capable of changing vehicle characteristic according to claim 1 wherein said vehicle characteristic is at least one of engine characteristic, steering characteristic, A/T shift pattern, suspension characteristic, steering wheel shaft angle, steering wheel longitudinal position, sheet position and side mirror position.

3. A vehicle capable of changing vehicle characteristic comprising:
plural vehicle characteristic setting portions for setting the vehicle characteristic to a free arbitrary
characteristic:
a vehicle characteristic memory portion for memorizing said set vehicle characteristic; and
a vehicle characteristic setting selection portion for selecting an arbitrary vehicle characteristic from said vehicle characteristic memory portion.

4. The vehicle capable of changing vehicle characteristic according to claim 3 wherein said vehicle characteristic setting selection portion is capable of changing over a vehicle adjustment mechanism adjustable depending on the taste or body size of a vehicle driver as personal data of every vehicle driver.

5. The vehicle capable of changing vehicle characteristic according to claim 3 wherein said vehicle characteristic setting selection portion is an independent unit and transmits memory data from said vehicle characteristic memory portion based on a setting of said vehicle characteristic setting selection portion to each control unit for controlling the vehicle characteristic.

6. The vehicle capable of changing vehicle characteristic according to claim 3 wherein each control unit for controlling the vehicle characteristic comprises:
a default characteristic memory portion for memorizing a default characteristic set up upon production;
a setting characteristic determining portion for determining whether the setting of said vehicle characteristic setting portion is valid or invalid; and
a selection switch which is changed over by said setting characteristic determining portion.

7. The vehicle capable of changing vehicle characteristic according to claim 6 wherein when said setting characteristic determining portion determines that it is valid, said selection switch is changed over to transmit the setting data of said vehicle characteristic setting portion to each of said control units, and when said setting characteristic determining portion determines that it is invalid, said selection switch is changed over to transmit memory data of said default characteristic memory portion to each of said control units.

8. A control apparatus of electric power steering unit for controlling a motor so as to provide a steering mechanism with steering assistance force based on a current instruction value computed based on a steering assist instruction value computed based on a steering torque generated in a steering shaft and a motor current detection value, said control apparatus further comprising a steering characteristic setting means which enables a vehicle driver to set up a steering characteristic arbitrarily and controlling said motor based on a steering characteristic set up by the steering characteristic setting means.

9. The control apparatus of electric power steering unit according to claim 8 further comprising:
plural steering characteristic memory means for memorizing each steering characteristic set up by said steering characteristic setting means; and
a steering characteristic selecting means for selecting a desired steering characteristic from said memorized plural kinds of the steering characteristics.

10. The control apparatus of electric power steering unit according to claim 8 or 9 further comprising:
a default characteristic memory means for memorizing a default steering characteristic set up upon production; and
a setting characteristic determining means for determining whether said steering characteristic is valid or invalid with reference to a preliminarily specif ied safety standard, wherein when said setting characteristic determining means determines that it is invalid, said motor is controlled based on said default steering characteristic.

11. The control apparatus of electric power steering unit according to claim 9 or 10 wherein a steering characteristic setting/selecting unit containing at least said steering characteristic setting means and the steering characteristic selecting means is connected to a current instruction arithmetic operating portion for computing said current instruction value through serial communication.

12. The control apparatus of electric power steering unit according to any of Claims 8 to 11 wherein said steering characteristic includes at least input/output characteristic and vehicle velocity responses characteristic.

13. The control apparatus of electric power steering unit according to any of Claims 8 to 12 wherein GUI is employed as said steering characteristic setting means.

14. The vehicle capable of changing vehicle characteristic according to any of Claims 1 to 7 loaded with the control apparatus of electric power steering unit described in any of Claims 8 to 13.
